# EUROPEAN PATENT SPECIFICATION

(11) **EP 3 622 819 B1**
(45) Date of publication and mention of the grant of the patent: **05.01.2022**
(21) Application number: 18799044.5
(22) Date of filing: 04.05.2018
(51) Int. Cl.: A01N 31/02, A01N 25/02, A01N 37/12, A01P 15/00

(54) **USE OF A COMPOUND FOR PROTECTING PLANTS BY MEANS OF STOMATAL CLOSURE AND METHOD FOR PROTECTING PLANTS BY MEANS OF STOMATAL CLOSURE WHICH COMPRISES APPLYING SAID COMPOUND TO THE PLANTS**
VERWENDUNG EINER VERBINDUNG ZUM SCHUTZ VON PFLANZEN MITTELS STOMATAVERSCHLUSS UND VERFAHREN ZUM SCHÜTZEN VON PFLANZEN MITTELS STOMATAVERSCHLUSS MIT ANWENDUNG DIESER VERBINDUNG AUF DIE PFLANZEN
UTILISATION D'UN COMPOSÉ POUR LA PRODUCTION DE PLANTES AU MOYEN D'UNE FERMETURE STOMATIQUE ET MÉTHODE DE PROTECTION DE PLANTES AU MOYEN D'UNE FERMETURE STOMATIQUE QUI CONSISTE À APPLIQUER LEDIT COMPOSÉ AUX PLANTES

(30) Priority: 11.05.2017 ES 201730685
(43) Date of publication of application: 18.03.2020
(73) Proprietor: Universitat Politècnica de València, 46022 València (ES); Consejo Superior de Investigaciones Científicas (CSIC), 28006 Madrid (ES)
(72) Inventor: LISON PARRAGA, María Purificación, 46022 Valencia (ES); LÓPEZ GRESA, María Pilar, 46022 Valencia (ES); RODRIGO BRAVO, Ismael, 46022 Valencia (ES); BELLES ALBERT, José María, 46022 Valencia (ES)
(74) Representative: Soler Lerma, Santiago
(86) International application number: PCT/ES2018/070341
(87) International publication number: WO 2018/206835

(56) References cited:
- JP-A- 2011 148 775
- US-A- 3 790 666
- HEIL M ET AL: "Long-distance signalling in plant defence", TRENDS IN PLANT SCIENCE, ELSEVIER SCIENCE, OXFORD, GB, vol. 13, no. 6, 1 June 2008 (2008-06-01), pages 264-272, XP022712325, ISSN: 1360-1385, DOI: 10.1016/J.TPLANTS.2008.03.005 [retrieved on 2008-06-01]
- THOMAS R HAMILTON-KEMP ET AL: "Emission patterns of wound volatile compounds following injury of ripe strawberry fruit", JOURNAL OF THE SCIENCE OF FOOD AND AGRICULTURE, vol. 83, no. 4, 1 March 2003 (2003-03-01), pages 283-288, XP55750926, GB ISSN: 0022-5142, DOI: 10.1002/jsfa.1310
- IRIS STAPPEN ET AL: "Chemical Composition and Biological Activity of Essential Oils from Wild Growing Aromatic Plant Species of Skimmia laureola and Juniperus macropoda from Western Himalaya", NATURAL PRODUCT COMMUNICATIONS, vol. 10, no. 6, 1 June 2015 (2015-06-01), XP055750921, US ISSN: 1934-578X, DOI: 10.1177/1934578X1501000669
- ALESSANDRA SCALA ET AL: "Green Leaf Volatiles: A Plant's Multifunctional Weapon against Herbivores and Pathogens", INTERNATIONAL JOURNAL OF MOLECULAR SCIENCES, vol. 14, no. 9, 30 August 2013 (2013-08-30), pages 17781-17811, XP055533202, ISSN: 1422-0067, DOI: 10.3390/ijms140917781
- CECOTTI et al.: "Determination of the volatile fraction of Polygonum bistorta L. at different growing stages and evaluation of its antimicrobial activity against two major honeybee (Apis mellifera)", Chemistry and biodiversity, vol. 9, no. 2 February 2012 (2012-02), pages 359-369, XP055548664, Retrieved from the Internet: URL:doi: 10.1002/cbdv.201100326
- PAUL W PARÉ ET AL: "Elicitors and priming agents initiate plant defense responses", PHOTOSYNTHESIS RESEARCH ; OFFICIAL JOURNAL OF THE INTERNATIONAL SOCIETY OF PHOTOSYNTHESIS RESEARCH, SPRINGER, BERLIN, DE, vol. 85, no. 2, 1 August 2005 (2005-08-01) , pages 149-159, XP019264086, ISSN: 1573-5079, DOI: 10.1007/S11120-005-1001-X

## Description

### Field of the invention

The present invention generally relates to the field of plant protection for protecting plants against biotic-type stress (such as infections) and abiotic-type stress (such as drought) by means of stomatal closure.

### Background of the Invention

Plants are organisms that are exposed to a plethora of both biotic and abiotic stressors. As they are sessile organisms, plants have developed adaptation and defense mechanisms to protect themselves from the hostile environment surrounding them.

As regards biotic stress caused by microorganisms, it should be mentioned that plants defend themselves against a large number of pathogens such as bacteria, fungi, viruses, viroids, etc., in their surroundings. A plant pathogen is an organism which completes part or all of its vital cycle growing in or on a plant tissue, causing plant damage. The definition of a pathogen is limited to microorganisms, excluding insects, although wounds caused by insects in plants also activate defense responses that are at times similar to those caused by pathogens.

Despite these numerous attacks, very few actually cause a disease due to the defensive weapons in plants. Namely, in response to said attacks or biotic stresses plants synthesize different defense proteins and secondary metabolites. These compounds can exercise different defense functions, i.e., they can act as antioxidants, antibacterials, or antifungals, or work as indirect defense metabolites, activating the plant defense response.

Some volatile organic compounds (VOCs) belong to this group of molecules. In fact, plants synthesize a wide range of volatile organic compounds which facilitate interactions with their environment, from the attraction of pollinators and seed dispersers to the defense against parasites, herbivores, and pathogens. The physicochemical properties of these compounds allow them to freely cross cell membranes and be released into the surrounding environment. At least 1700 volatile compounds have been identified today from more than 90 families of plants, constituting about 1% of all known secondary plant metabolites.

Although to a lesser extent, VOC emissions in plant-pathogen interaction, i.e., in plants with bacterial, viral, or fungal infections, have also been described. Many oxylipins are known to exhibit antifungal and antimicrobial properties which weaken and/or destroy the pathogen. For example, the antimicrobial compound, colneleic acid, accumulates rapidly in potato leaves infected by fungi or viruses (Blee, E. (2002). Impact of phyto-oxylipins in plant defense. Trends in Plant Science, 7(7), pages 315-322). Very few studies have been conducted up until now in the case of bacteria-induced VOCs. VOC accumulation has been detected in pepper plants infected with the bacterium *Xanthomonas* (Cardoza, Y. and Tumlinson, J. (2006). Compatible and Incompatible Xanthomonas Infections Differentially Affect Herbivore-Induced Volatile Emission by Pepper Plants. Journal of Chemical Ecology, 32(8), pages 1755-1768). Likewise, the induction of different VOCs in tobacco plants infected by the bacterium *Pst* in an incompatible-type infection has been described. Some of the induced compounds are monoterpenes, sesquiterpenes, and other volatile compounds such as MeSA and indole (Huang, J., Cardoza, Y., Schmelz, E., Raina, R., Engelberth, J. and Tumlinson, J. (2003). Differential volatile emissions and salicylic acid levels from tobacco plants in response to different strains of Pseudomonas syringae. Plant, 217(5), pages 767-775) . MeSA was the first chemical signal proven to be capable of being translocated in tobacco plants from the infection site to other plant tissues, and of being transmitted through air from infected plants to healthy plants. Moreover, it has been described that the volatile compound (*E*)-β-caryophyllene emitted by *Arabidopsis thaliana* inhibits *Pst* bacterial growth. It has recently been described that the emission of different monoterpenes and sesquiterpenes may be associated with tolerance against *huanglongbing* (greening) in citrus (Hijaz, F., Nehela, Y., and Killiny, N. (2016). Possible role of plant volatiles in tolerance against huanglongbing in citrus. Plant Signaling & Behavior, 11(3), p.e1138193).

Depending on their biosynthetic origin, VOCs are divided into different classes, particularly terpenoids, phenylpropanoids/benzenoids, and green leaf volatiles (GLVs), the latter derived from the lipoxygenase (LOX) pathway. GLVs have been associated with the induction of resistance in various plant species (see, for example, Arimura, G., Tashiro, K., Kuhara, S., Nishioka, T., Ozawa, R., and Takabayashi, J. (2000). Gene Responses in Bean Leaves Induced by Herbivory and by Herbivore-Induced Volatiles. Biochemical and Biophysical Research Communications, 277(2), pages 305-310; Engelberth, J., Alborn, H., Schmelz, E., and Tumlinson, J. (2004). Airborne signals prime plants against insect herbivore attack. Proceedings of the National Academy of Sciences, 101(6), pages 1781-1785; Heil, M. and Ton, J. (2008). Long-distance signaling in plant defense. Trends in Plant Science, 13(6), pages 264-272). GLV induction during bacterial infection was discovered for the first time in beans (Croft, K., Juttner, F. and Slusarenko, A. (1993). Volatile Products of the Lipoxygenase Pathway Evolved from Phaseolus vulgaris (L.) Leaves Inoculated with Pseudomonas syringae pv phaseolicola. Plant Physiology, 101(1), pages 13-24).

All these results seem to indicate that GLVs may play a role in the defense response of plants against pathogens.

Moreover, in plant-pathogen interaction, stomata play a particularly important role as they constitute the site of the entry of many leaf pathogens. Stomata are small pores in the leaf epidermis, formed by a pair of guard cells which have developed mechanisms for detecting and responding to endogenous and environmental stimuli. By changing the pore size, stomata can regulate the exchange of gases between the plant and the environment, as well as control water loss. A study conducted a few years back provided evidence of the active role of stomata in limiting bacterial infection. In particular, it was found that stomata closed one hour after exposing the plant to a bacterial suspension, where said closure may also be activated by bacterial protein effectors (Melotto, M., Underwood, W., and He, S. (2008). Role of Stomata in Plant Innate Immunity and Foliar Bacterial Diseases. Annual Review of Phytopathology, 46(1), pages 101-122; Xin, X. and He, S. (2013). Pseudomonas syringaepv.tomatoDC3000: A Model Pathogen for Probing Disease Susceptibility and Hormone Signaling in Plants. Annual Review of Phytopathology, 51(1), pages 473-498).

It has been described that treatment of *Arabidopsis* plants with (E)-2-hexenal produces the effect of an increased susceptibility to the bacterium *Pst* (Scala, A., Allmann, S., Mirabella, R., Haring, M., and Schuurink, R. (2013). Green Leaf Volatiles: A Plant's Multifunctional Weapon against Herbivores and Pathogens. International Journal of Molecular Sciences, 14(9), pages 17781-17811), so neither GLV of this type nor derivatives thereof are expected to be useful in protecting plants against infections.

Based on document KR20110030796 A, a method for inducing resistance to plant diseases is known, which method consists of treating the plant with BTH (benzothiadiazole) or non-pathogenic bacteria, thereby causing the plant to emit nonanal which leads to an increase in plant immune response.

Document ES2277703 B1 is also known, which document discloses the inhibition of the expression of the Ep5C gene encoding an extracellular cationic peroxidase, which is sufficient for imparting marked resistance to the pathogen *Pseudomonas syringae pv. tomato* (*P.s. tomato*) which causes bacterial spot, a devastating disease of tomato plants.

However, the methods for imparting resistance to plant diseases known up until now have certain drawbacks, namely because their effectiveness does not measure up to what is desired and/or they are complex methods that are therefore expensive to implement.

Therefore, there is still a need in the art for an alternative compound, composition, and use for imparting to plants protection against diseases caused by infections by various classes of pathogens.

### Summary of the Invention

To solve the problems of the prior art, the present invention discloses, in a first aspect, a compound of formula I 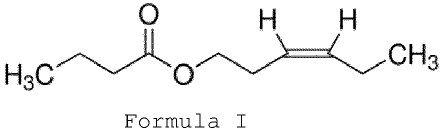 for use in the protection of plants by means of stomatal closure.

The compound of formula I is known as (Z)-3-hexenyl butanoate (HB). It is a (Z)-3-hexenol ester that belongs to the aforementioned group of green leaf volatiles (GLVs) and is naturally produced by some plants after being subjected to certain stresses such as infections.

In a second aspect, the present invention relates to the use of the aforementioned compound (HB) for protecting plants by means of stomatal closure.

Likewise, in a third aspect, the present invention relates to a composition for protecting plants by means of stomatal closure comprising HB as well as a suitable carrier from the phytosanitary viewpoint.

Finally, in a fourth aspect, the present invention relates to a method for protecting plants by means of stomatal closure which comprises applying to the plants the aforementioned compound HB.

Specifically, stomatal closure can protect plants against biotic stresses (such as infections, for example, bacterial infections) and abiotic stresses (for example, drought).

### Brief Description of the Figures

The present invention will be better understood in reference to the following figures:
Figure 1 shows stomatal opening ratio results in a study conducted with tomato plants after treatments with (Z)-3-hexenyl butanoate (HB) for 24 hours, in comparison with untreated tomato plants (control).
Figure 2 shows the stomatal opening ratio in Flora Dade tomato plants treated with various (Z)-3-hexenol esters as well as in untreated plants.
Figure 3 shows the bacterial growth in tomato plants infected with *Pseudomonas syringae* pv DC3000 pv. *tomato* after prior treatment with (Z)-3-hexenyl butanoate (HB) for 24 hours, as well as without prior treatment (control).
Figure 4 shows stomatal opening ratio results in a study conducted with other species.

### Detailed Description of the Preferred Embodiments

The present inventors carried out extensive studies to determine the effects of different GLVs, namely different (Z)-3-hexenol esters, on stomatal closure in plants as well as the ratio between said stomatal closure and resistance against infections. The experiments which have been carried out will be described in detail below.

Briefly, treatment was first performed with the volatile compound/compounds under study as will be described below. After 24 hours, the plants were infected with previously prepared bacterial inoculums as will be described below. Sampling was performed 1 dpi (day post-infection) as will be indicated below to conduct the bacterial infection study: to perform bacterial count and measure stomatal opening.

### Materials and methods

### Plant material

Tomato plants (*Solanum lycopersicum*) of the Flora-Dade (FD) variety were used in the following examples.

Seed germination was performed by means of *in vitro* cultivation in sterile conditions. The seeds were wrapped in a mesh closed with a thread. The bags containing each type of seed were then introduced for 30 minutes in a receptacle with: 75 ml of distilled water, 75 ml of bleach, and 5-6 drops of Tween 20. The seeds were stirred in the bleach so as to weaken the testa and facilitate germination. A water series, consisting of passing the bags containing seeds through 3 receptacles of distilled water for 5 minutes, 10 minutes, and 15 minutes, was then performed to gradually eliminate excess bleach. The seeds were sown in a laminar flow cabinet with sterile material on large Petri dishes with filter paper and 14 ml of distilled water. The dishes remained in darkness for two days at 24°C.

When the seeds germinated, they were cultivated in a greenhouse at a temperature ranging between 18 and 26°C with a relative humidity of 50-70% and a photoperiod of 16 hours of light and 8 hours of darkness. For said cultivation, each seed was sown in individual pots (12 cm deep x 13 cm in diameter) with peat and perlite. The pots were watered by hand with a Hoagland solution.

### Treatment with volatile compounds

The plants under study were placed in methacrylate chambers, distributing them depending on the volumetric capacity of each chamber. Said capacity was two, three, and five plants for a small chamber (45 l), a medium chamber (70 l), and a large chamber (110 l), respectively. By knowing the density and the molecular mass of each compound, the volume to be placed on small hydrophilic cotton pads for obtaining a final concentration of each compound of 5 µM in each chamber was calculated. Once the volume of each compound was added to its corresponding chamber, the boxes were sealed with vaseline and the covers were taped with a transparent film and adhesive tape to assure a uniform, closed atmosphere of the volatile compounds.

Treatment with each compound was performed individually, i.e., each box contained a single compound. The boxes remained closed for 24 hours and were not opened until the sampling time.

### Microbiological material

The bacteria used herein belong to the *Pseudomonas syringae* pv. *tomato* species, namely the *Pst* Δ*AvrPto* strain, which has the *AvrPto* avirulence gene deleted, and therefore unable to be recognized by the *Pto* resistance gene of the tomato variety, thereby generating a compatible interaction and causing the disease.

The bacterial strain was stored at -80°C in glycerol, an ionic cryoprotectant which reduces the amount of ice, thereby preserving the cells in the freezing process.

### Infections

The tomato plants were inoculated with the *Pst* Δ*AvrPto* bacterial strain when the third and fourth true leaves of these plants were sufficiently developed, i.e., after 25-30 days.

The culture media used for carrying out the infections and bacterial count were as follows:

**Table 1: Composition and preparation of 1 l of LB agar bacterial culture medium**

| Compound | Amount |
|---|---|
| LB agar (Pronadisa) | 35 g |
| Distilled H₂O | Up to 1 l |
| Subject to autoclave (121°C, 15 min) | |
| Kanamycin (100 mg/ml) | 0.25 ml |
| Rifampicin (10 mg/ml) | 10 ml |
| Spectinomycin (10 mg/ml) | 2.5 ml |

**Table 2. Composition and preparation of 1 l of King B liquid bacterial culture medium.**

| Compound | Amount |
|---|---|
| Proteose peptone | 10 g |
| K₂HPO₄ | 1.5 g |
| Glycerol | 15 g |
| Distilled H₂O / adjust to pH 7 | Up to 1 l |
| Subject to autoclave (121°C, 15 min) | |
| 1 M sterile MgSO₄ | 5 ml |
| Rifampicin (10 mg/ml) | 5 ml |

**Table 3. Composition and preparation of 1 l of King B agar bacterial culture medium.**

| Compound | Amount |
|---|---|
| King B agar (King B Medium Pseudomonas F Agar, USP) (Pronadisa) | 37 g |
| Distilled H₂O | Up to 1 l |
| Glycerol | 10 g |
| Subject to autoclave (121°C, 15 min) | |
| Rifampicin (10 mg/ml) | 5 ml |

The bacterium, previously stored in glycerol at -80°C, was streaked on small Petri dishes (90 mm in diameter) and allowed to grow in darkness for 48 hours at 28°C, each dish containing 25 ml of LB agar medium (Pronadisa) with the antibiotics indicated above (Table 1). After the growth of colonies was observed, they were collected with pipette tips and seeded in 3 ml of King B liquid medium in 50 ml Falcon tubes (Table 2). The bacteria grew under stirring at 200-220 rpm and 28°C for 24 hours. Next, 1 ml of the resulting bacterial culture was transferred to a new Falcon tube with 15 ml of the same medium to refresh the bacterium and promote growth. The growth conditions were the same as in the preceding step. Finally, the bacterial culture distributed in all the tubes was pooled in 4 Falcon tubes. They were centrifuged for 15 minutes at 3000 rpm and the pellet of each tube was resuspended in 20 ml of 10 mM sterile MgCl₂.

The absorbance at 600 nm of a 1:10 dilution of the bacterial culture was measured in a spectrophotometer, based on which the volumes of bacterial culture and of 10 mM MgCl₂ required for obtaining a final inoculum with an optical density (OD) of 0.1 at 600 nm were calculated. Said optical density corresponds to about 1 x 10⁷ colony forming units per milliliter (CFU/ml).

Infection was carried out by dipping, immersing the plants all the way to the base of the stem in a 10 mM MgCl₂ solution with bacterial culture for 30 seconds. The control plants were similarly immersed in a 10 mM sterile MgCl₂ solution without bacterial inoculum.

### Sampling

In the case of the counting experiments, and to measure the stomatal ratio, the sample was collected fresh from the plant and each experiment continued independently.

### Bacterial growth

This technique consists of counting the colony forming units (CFUs) present in the infected plant material.

Three 1 cm² discs were taken from each plant with the aid of a punch and immersed in Eppendorf tubes with 300 µl of 10 mM MgCl₂, such that each tube corresponds to one plant. Using glass beads inside the tubes and the *TissueLyser II* homogenizer (Qiagen), the discs were crushed and another 700 µl of 10 mM MgCl₂ were added. It was stirred with a vortex until complete homogenization, after which 1:10 serial dilutions up to 10⁻⁷ were performed. King B agar medium (Pronadisa) was poured into Petri dishes 90 mm in diameter, as indicated in Table 3. Once solidified, 100 µl of the last four serial dilutions (10⁻⁴, 10⁻⁵, 10⁻⁶, and 10⁻⁷) were seeded in the dishes and spread with the aid of small glass spheres. After incubating the dishes at 28°C for 48 hours, the isolated formed colonies were counted in those dilutions in which counting was possible with the aid of a colony counter (Selecta).

### Stomatal opening measurements

To measure the stomatal ratio of the plants, photographs of the mold thereof were taken. Said molds were obtained from the underside of the folioles, using Imedio universal liquid glue. By applying a thin layer of glue and leaving it to dry, a mold of the underside could be obtained and this mold was carefully removed with the aid of tweezers. In order to view the stomata under the light microscope, planar sections of the molds were mounted on several slides, covered with a coverslip, and hydrated with the aid of a Pasteur pipette and distilled water.

By means of the bright-field microscopy technique, colorless samples can be viewed under the microscope without having to previously stain them. In this sense, 5 photographs were taken of each sample, in which the stomata were perfectly visible. Next, by means of using the Image J image analysis program, the width and height of 50 stomata per plant of 3 plants per condition were measured in order to calculate the mean ratio thereof in each sample.

### Results

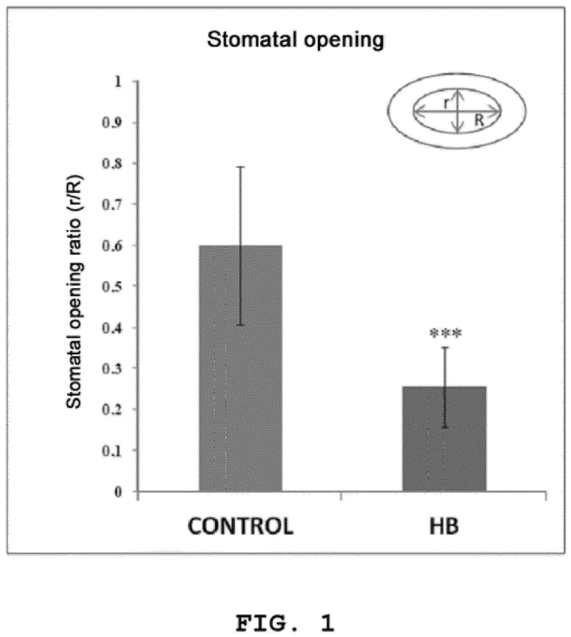

Figure 1 graphically depicts stomatal opening ratio results obtained in the experiments described in detail above for plants that were not subjected to any prior treatment (control) and for plants subjected to prior treatment for 24 hours with (Z)-3-hexenyl butanoate (HB). The stomatal opening ratio is defined as the ratio between the minor radius and major radius of the stoma (see the upper left part of the figure). As can be seen in Figure 1, the stomatal opening ratio in plants subjected to prior treatment with HB is substantially lower than the stomatal opening ratio in control plants. The asterisks (***) indicate statistical significance with a value of p < 0.001 with respect to control plants. Three independent experiments were carried out. The ratios depicted in Figure 1 correspond to the mean ± standard error of the three repetitions of a representative experiment.

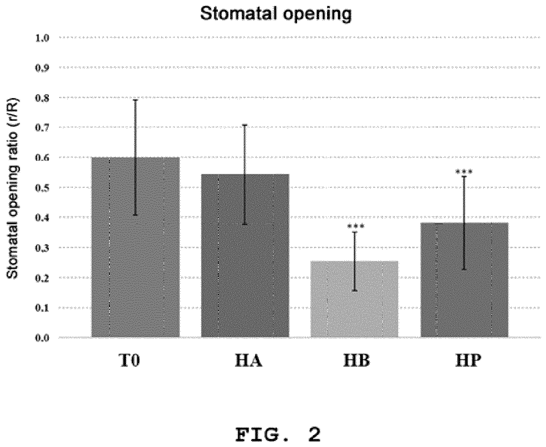

Figure 2 is a graph similar to that of Figure 1 showing stomatal opening ratio results obtained with plants with no prior treatment as a control (T0), as well as with plants subjected to prior treatment for 24 hours with (Z)-3-hexenyl acetate (HA), (Z)-3-hexenyl butanoate (HB), and (Z)-3-hexenyl propionate (HP). As can be seen, despite the structural similarity of the three compounds used in the study, (Z)-3-hexenyl butanoate produced results that are substantially and surprisingly better than the other two compounds used. Namely, (Z)-3-hexenyl acetate did not produce any substantial reduction in the stomatal opening ratio with respect to the control plants (T0). (Z)-3-hexenyl propionate did produce a significant reduction with respect to the control plants (again the asterisks indicate a value of p < 0.01), but it still was not comparable with the substantially better results obtained with (Z)-3-hexenyl butanoate.

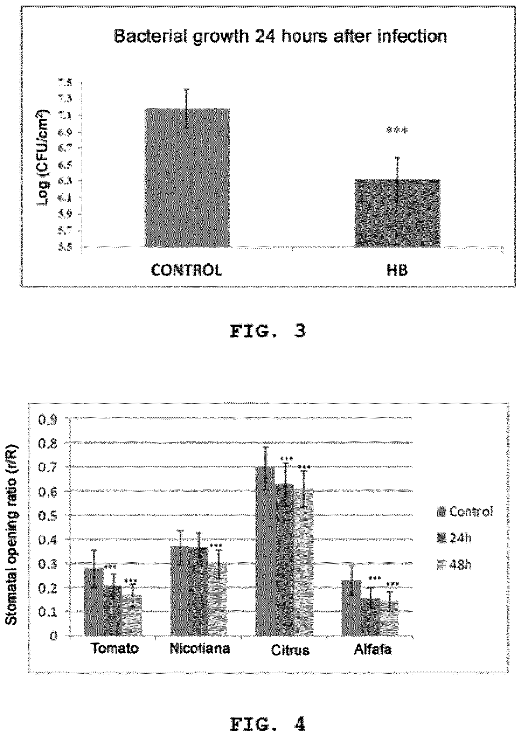

Figure 3 shows the results of bacterial growth obtained with the preceding experiments. More specifically, bacterial growth is depicted in log (CFU/cm²) 24 hours after infection for plants with no prior treatment (control) as well as for plants subjected to prior treatment for 24 hours with (Z)-3-hexenyl butanoate (HB). Three independent experiments were carried out. The results shown in the graph of Figure 3 correspond to the means ± standard error of five independent plants of a representative experiment. The asterisks (***) indicate statistical significance with a value of *p* < 0.001 with respect to the control plants.

As can be seen in Figure 3, treatment with HB at the indicated concentration and in the assay conditions gives rise to a significantly lower number of CFUs in the infected tissues, and therefore, the resistance of the Flora-Dade tomato plants to the bacterium *Pst* increases significantly.

Therefore, it was proven that treatment of tomato plants with (Z)-3-hexenyl butanoate caused stomatal closure (Figures 1 and 2), which in turn resulted in the protection of the Flora-Dade tomato plants from *Pseudomonas syringae* bacterial infection, increasing their resistance to said bacterium (Figure 3), and said protection was significantly greater than the protection that could be obtained by means of other structurally related (Z)-3-hexenol esters, such as (Z)-3-hexenyl acetate and (Z)-3-hexenyl propionate. Furthermore, the obtained results are particularly surprising in view of the prior art, namely the article by Scala, A. *et al.,* 2013, mentioned above, in which (E)-2-hexenal is said to cause the opposite effect by increasing the susceptibility of *Arabidopsis* plants to the bacterium *Pst.*

Figure 4 graphically depicts stomatal opening ratio results obtained for plants that were not subjected to any prior treatment (control) and for plants of other species, such as nicotiana, citrus, and alfalfa plants, subjected to prior treatment for 24 hours and 48 hours with (Z)-3-hexenyl butanoate (HB). As can be seen in Figure 4, the stomatal opening ratio in plants subjected to prior treatment with HB is substantially smaller than the stomatal opening ratio in control plants.

Besides being the first volatile compound described as being able to significantly induce stomatal closure, and therefore protect against infections, (Z)-3-hexenyl butanoate also presents a series of advantages during use, among which the following stand out:
- It is a very effective compound.
- It is a natural compound and the doses used are in the order of magnitude of those emitted by plants, so it is not toxic.
- It is an inexpensive commercial product that is easy to synthesize chemically (condensation reaction of butanoic acid with Z-3-hexenol in an acidic medium).
- It is a stable compound.
- Given its volatile nature, its mode of application may constitute an advantage given that it can be applied by spraying or associated with diffuser devices.
- Treatments with the compound will not leave residues in crops.

Although specific experiments carried out with tomato plants of the Flora-Dade variety have been described, one skilled in the art will understand that the compound described in the present invention ((Z)-3-hexenyl butanoate) will likewise be useful for use in the protection of plants of another type by means of stomatal closure.

Likewise, although experiments in which tomato plants were subjected to *Pseudomonas syringae* bacterial infection have been described, one skilled in the art will understand that the compound described in the present invention ((Z)-3-hexenyl butanoate) will likewise be useful for use in the protection of plants against infections by bacteria of another type, as well as infections by pathogens of another type (for example, fungi and viruses).

Therefore, as mentioned above, the present invention relates to the compound (Z)-3-hexenyl butanoate for use in the protection of plants by means of stomatal closure.

Furthermore, the invention also relates to plant protection (phytosanitary) compositions comprising (Z)-3-hexenyl butanoate as well as a suitable carrier from the phytosanitary viewpoint, such as water, for example, and optionally a surface active agent, such as 0.05% Tween, for example. These compositions can be administered to the plants to be protected by any suitable means, such as spraying, diffuser devices, etc.

The invention also relates to a method for protecting plants by means of stomatal closure which comprises applying (Z)-3-hexenyl butanoate to the plants to be protected by any suitable means (spraying, diffuser devices, etc.).

Finally, although the ratio between stomatal closure in plants and the protection thereof against biotic stresses such as infections has been described and demonstrated, it is conceivable that stomatal closure will also protect plants against abiotic-type stresses, such as drought. In fact, by means of stomatal closure, the amount of water that plants will lose through stomata will be reduced and their resistance against periods of drought will thereby increase.

## Claims

1. Use of a compound of formula I 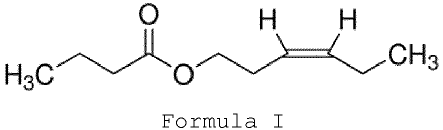 for protecting plants by means of stomatal closure.

2. Use according to claim 1, **characterized in that** it protects plants against infection.

3. Use according to claim 2, **characterized in that** it protects plants against bacterial infection.

4. Use according to claim 3, **characterized in that** it protects plants against *Pseudomonas syringae* bacterial infection.

5. Use according to claim 1, **characterized in that** it protects plants against drought.

6. Use according to any of claims 1 to 5, **characterized in that** the protected plants are tomato plants.

7. Use according to any of claims 1 to 5, **characterized in that** the protected plants are nicotiana, citrus, or alfalfa plants.

8. Method for protecting plants by means of stomatal closure which comprises applying to the plants a compound of formula I

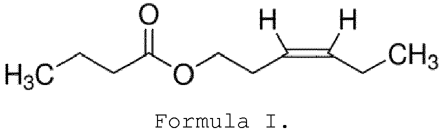

9. Method according to claim 8, **characterized in that** the plants are protected against infection.

10. Method according to claim 9, **characterized in that** the plants are protected against bacterial infection.

11. Method according to claim 10, **characterized in that** the plants are protected against *Pseudomonas syringae* bacterial infection.

12. Method according to claim 8, **characterized in that** the plants are protected against drought.

13. Method according to any of claims 8 to 12, **characterized in that** the plants protected by means of said method are tomato plants.

14. Method according to any of claims 8 to 12, **characterized in that** the plants protected by means of said method are nicotiana, citrus, or alfalfa plants.

## Patentansprüche

1. Verwendung einer Verbindung der Formel I 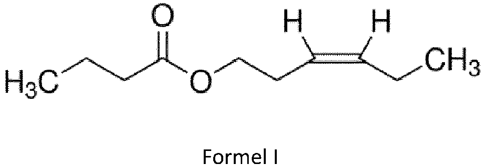 zum Schutz von Pflanzen durch Verschluss der Stomata.

2. Verwendung nach Anspruch 1, **dadurch gekennzeichnet, dass** sie Pflanzen vor einer Infektion schützt.

3. Verwendung nach Anspruch 2, **dadurch gekennzeichnet, dass** sie Pflanzen vor einer bakteriellen Infektion schützt.

4. Verwendung nach Anspruch 3, **dadurch gekennzeichnet, dass** sie Pflanzen vor einer bakteriellen Infektion durch *Pseudomonas syringae* schützt.

5. Verwendung nach Anspruch 1, **dadurch gekennzeichnet, dass** sie Pflanzen gegen Dürre schützt.

6. Verwendung nach einem der Ansprüche 1 bis 5, **dadurch gekennzeichnet, dass** die geschützten Pflanzen Tomatenpflanzen sind.

7. Verwendung nach einem der Ansprüche 1 bis 5, **dadurch gekennzeichnet, dass** die geschützten Pflanzen Nikotiana-, Zitrus- oder Alfalfa-Pflanzen sind.

8. Verfahren zum Schutz von Pflanzen durch Verschluss der Stomata, welches das Aufbringen einer Verbindung der Formel I 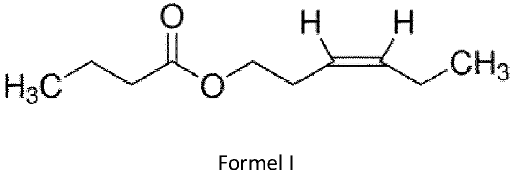 auf die Pflanzen umfasst.

9. Verfahren nach Anspruch 8, **dadurch gekennzeichnet, dass** die Pflanzen gegen eine Infektion geschützt werden.

10. Verfahren nach Anspruch 9, **dadurch gekennzeichnet, dass** die Pflanzen gegen eine bakterielle Infektion geschützt werden.

11. Verfahren nach Anspruch 10, **dadurch gekennzeichnet, dass** die Pflanzen gegen eine bakterielle Infektion mit Pseudomonas syringae geschützt werden.

12. Verfahren nach Anspruch 8, **dadurch gekennzeichnet, dass** die Pflanzen gegen Dürre geschützt werden.

13. Verfahren nach einem der Ansprüche 8 bis 12, **dadurch gekennzeichnet, dass** die durch das Verfahren geschützten Pflanzen Tomatenpflanzen sind.

14. Verfahren nach einem der Ansprüche 8 bis 12, **dadurch gekennzeichnet, dass** die durch das Verfahren geschützten Pflanzen Nikotiana-, Zitrus- oder Alfalfa-Pflanzen sind.

## Revendications

1. Utilisation d'un composé de formule I 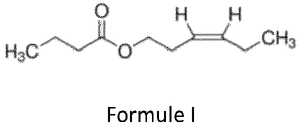 pour protéger des plants par fermeture des stomates.

2. Utilisation selon la revendication 1, **caractérisée en ce qu'**elle protège les plants contre l'infection.

3. Utilisation selon la revendication 2, **caractérisée en ce qu'**elle protège les plants contre une infection bactérienne.

4. Utilisation selon la revendication 3, **caractérisée en ce qu'**elle protège les plants contre une infection bactérienne à *Pseudomonas syringae*.

5. Utilisation selon la revendication 1, **caractérisée en ce qu'**elle protège les plants contre la sécheresse.

6. Utilisation selon l'une des revendications 1 à 5, **caractérisée en ce que** les plants protégés sont des plants de tomates.

7. Utilisation selon l'une des revendications 1 à 5, **caractérisée en ce que** les plants protégés sont des plants de nicotiana, d'agrumes ou de luzerne.

8. Procédé de protection de plants par fermeture des stomates qui consiste à appliquer aux plants un composé de formule I

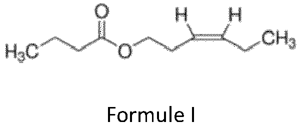

9. Procédé selon la revendication 8, **caractérisé en ce que** les plants sont protégés contre l'infection.

10. Procédé selon la revendication 9, **caractérisé en ce que** les plants sont protégés contre une infection bactérienne.

11. Procédé selon la revendication 10, **caractérisé en ce que** les plants sont protégés contre une infection bactérienne à *Pseudomonas syringae*.

12. Procédé selon la revendication 8, **caractérisé en ce que** les plants sont protégés contre la sécheresse.

13. Procédé selon l'une des revendications 8 à 12, **caractérisé en ce que** les plants protégés par ledit procédé sont des plants de tomates.

14. Procédé selon l'une des revendications 8 à 12, **caractérisé en ce que** les plants protégés par ledit procédé sont des plants de nicotiana, d'agrumes ou de luzerne.
